# FASCICULE DE BREVET EUROPEEN

(11) **EP 3 705 797 B1**
(45) Date de publication et mention de la délivrance du brevet: **26.04.2023**
(21) Numéro de dépôt: 20160990.6
(22) Date de dépôt: 04.03.2020
(51) Int. Cl.: F24F 3/16, B01D 53/88

(54) **APPAREIL DE PURIFICATION DE L'AIR PAR PHOTOCATALYSE COMPRENANT DES FIBRES OPTIQUES**
LUFTREINIGUNGSGERÄT DURCH FOTOKATALYSE, DAS OPTISCHE FASERN UMFASST
DEVICE FOR PURIFYING AIR BY PHOTOCATALYSIS COMPRISING OPTICAL FIBRES

(30) Priorité: 06.03.2019 FR 1902297
(43) Date de publication de la demande: 09.09.2020
(73) Titulaire: SEB S.A., 69130 Ecully (FR)
(72) Inventeur: SIBEAUD, Mathilde, 69009 LYON (FR); PACCAUD, Denis, 69008 LYON (FR); MANDICA, Franck, 69340 FRANCHEVILLE (FR)
(74) Mandataire: SEB Développement

(56) Documents cités:
- WO-A1-2008/045895
- WO-A1-2009/019388
- WO-A1-2011/148093
- WO-A1-2016/020115
- FR-A1- 2 910 341
- FR-B1- 2 910 341
- JP-A- 2000 140 579
- US-A- 4 234 907

## Description

### Domaine technique

La présente invention se rapporte au domaine de la dépollution et purification de l'air intérieur des habitations, et notamment à un appareil de purification de l'air comprenant un dispositif de filtration de l'air intégrant au moins une fibre optique et un catalyseur à action photo-catalytique.

On notera que, dans ce document, les termes «longitudinal», «transversal», «perpendiculaire», «parallèle», «rotation», «horizontal», «vertical», «inférieur», «supérieur», «haut», «bas», «sécant», « coaxiaux », «convexe», «concave», «plan» employés pour décrire l'appareil selon l'invention, font référence à ce dispositif en situation d'usage, lorsqu'il est posé sur un plan horizontal.

Les polluants sont principalement composés de deux catégories. L'une rassemble les polluants particulaires tels que la poussière, les bactéries, les moisissures, dont la forme est grande et de structures moléculaires complexes, dont la dimension varie de 0,01 micron à plusieurs centaines de microns. L'autre catégorie rassemble les polluants de type gazeux, par exemple les émanations volatiles perçues par les organes de l'odorat, comme les odeurs, ou les composés organiques volatils (COV) tels que des composés chimiques, généralement de structure chimique simple. Les polluants de type gazeux peuvent se composer d'une variété d'éléments chimiques. Leur dimension est petite et varie de quelques angströms à quelques nanomètres.

Les techniques dites d'Oxydation Avancées (TAO) permettent d'oxyder les composés organo-volatils (COV). Les plus efficaces sont celles qui conduisent à la formation de radicaux hydroxyles OH•, qui ont un pouvoir oxydant supérieur à celui des oxydants traditionnels. C'est le cas de la photocatalyse. La photocatalyse consiste en l'irradiation d'un matériau semi-conducteur (type TiO2), ce qui va permettre l'oxydation ou la réduction des COV en contact avec le matériau photo-catalytique. L'énergie apportée par la lumière permet d'activer le semi-conducteur. Le semi-conducteur est considéré comme un catalyseur. Le principe repose sur l'absorption d'un photon par le solide semi-conducteur, conduisant à la promotion d'un électron de la bande de valence à la bande de conduction en libérant une lacune, et formant ainsi des radicaux libres qui vont soit réagir avec des composés présents dans le milieu environnant soit se recombiner suivant divers mécanismes, conférant ainsi au solide des propriétés d'oxydant et de réducteur. La plupart des composés organo-volatils ainsi que de nombreux pesticides, herbicides, surfactants et colorants sont complètement oxydés en produits moins toxiques par cette technique, jusqu'à obtenir du dioxyde de carbone CO₂ et de l'eau H₂O.

Les principaux COV dans l'air ambiant sont : le formaldéhyde, l'acétaldéhyde, l'acétone, l'heptane, les alcools dont l'isopropanol, le décane, le benzène, le toluène.

### Technique antérieure

Il est connu des appareils de purification de l'air qui utilisent la technique de la photocatalyse. Cependant ces appareils rejettent souvent des COV alors qu'au contraire ils sont censés les éliminer et purifier l'air. Il est difficilement compréhensible qu'un épurateur ou purificateur rejette des COV même si ces COV rejetés sont différents en nature et/ou en quantité de ce qui était présent dans l'air au départ avant filtration. Le grand inconvénient de ces appareils est donc la production de sous-produits, qui peuvent être parfois plus dangereux que les molécules de départ (exemple l'heptane qui en se dégradant peut former du formaldéhyde).

Pour diminuer la formation de ces sous-produits toxiques, des purificateurs connus proposent de baisser le régime de fonctionnement (vitesse des gaz ou intensité lumineuse) jusqu'à ce que la teneur en COV dans l'air à purifier baisse en-dessous d'une certaine valeur. Aussi il est regrettable de ne pas pouvoir faire fonctionner le purificateur justement lorsque l'on a le plus besoin de lui, c'est-à-dire en présence d'une forte concentration en COV. En conséquence, les polluants en phase gazeuse ne peuvent pas être absorbés et être éliminés efficacement. De plus l'accumulation des polluants sous forme de particules sur la surface du filtre d'élimination gazeux pourrait conduire à d'autres problèmes, tels que le filtre fournira une zone d'incubation pour la croissance des bactéries, ou une perte d'efficacité du filtre dans le temps. Le document WO-A-2011/148093 divulgue un appareil de purification de l'air comprenant un filtre à action photocatalytique, constitué d'un enchevêtrement de fibres minérales revêtues d'un matériau à action photocatalytique qui est illuminé par une source de photon. Le document FR-A-2910341 divulgue un nappe textile intégrant au moins un fibre optique est un catalyseur à action photocatalytique, la fibre présentant des altération en surface afin de diffuser la lumière latéralement par rapport au sens de déplacement de la lumière dans la fibre.

L'invention propose de résoudre ces inconvénients en proposant un appareil de purification de l'air comprenant un dispositif de filtration de l'air intégrant au moins une fibre optique et un catalyseur à action photo-catalytique capable d'éliminer les polluants.

### Exposé de l'invention

La présente invention a pour objet un appareil de purification de l'air tel que revendiqué dans la revendication 1.

De préférence l'appareil selon l'invention est un appareil domestique qui comprend un carter formant l'enveloppe extérieure de l'appareil.

Un avantage de l'invention est de fournir un appareil compact pour purifier l'air par photocatalyse. De préférence, l'appareil selon l'invention est un appareil mobile pendant son utilisation, c'est-à-dire qu'il est déplaçable et non pas fixé sur un support. Ainsi l'appareil peut être transporté par un utilisateur afin de le déplacer, soit en le poussant du pied soit en le saisissant avec les mains, que l'appareil soit en fonctionnement ou non.

L'appareil selon l'invention est un appareil domestique individuel et non pas un système centralisé d'air conditionné, par exemple d'un hôpital, d'un aéroport, d'un centre commercial, d'une station de métro ou de train.

L'appareil selon l'invention est un appareil portatif individuel adapté pour les petits espaces comme celui d'une habitation individuelle ou d'une caravane.

L'appareil selon l'invention comprend au moins une entrée d'air. Il est envisagé que l'appareil selon l'invention comprenne plusieurs entrées d'air, identiques ou différentes.

L'appareil selon l'invention comprend au moins une sortie d'air. Il est envisagé que l'appareil selon l'invention comprenne plusieurs sorties d'air, identiques ou différentes.

L'appareil selon l'invention comprend un dispositif de filtration de l'air intégrant au moins une fibre optique et un catalyseur à action photo-catalytique. De préférence, le catalyseur à action photo-catalytique est agencé à la surface de la fibre optique c'est-à-dire que la fibre est revêtue de catalyseur à action photo-catalytique.

Les fibres optiques du dispositif de filtration de l'appareil selon l'invention sont de préférence disposée en chaîne et/ou en trame tissées avec des fils de liage en chaîne et en trame, les fibres optiques étant aptes à émettre latéralement la lumière. Les fils de liage de la nappe textile comportent avantageusement à leur surface des particules photo-catalytiques. De préférence, l'appareil de filtration de l'appareil selon l'invention comporte des fibres optiques tissées avec des fils de liage enduits du catalyseur à action photo-catalytique.

Il est envisagé que le dispositif de filtration de l'appareil selon l'invention présente plusieurs nappes textiles superposées en feuillet, de manière à former des couches successives superposées. Les feuillets sont avantageusement agencés en couches de manière parallèle. Les feuillets sont de préférence espacés d'au moins 1 cm. L'air à filtrer circule entre les feuillets de nappes textiles afin de rentrer en contact avec le catalyseur. Avantageusement la circulation de l'air se fait selon un flux à débit moyen faible mais tourbillonnant. Ces feuillets permettent à l'air de circuler tangentiellement par rapport au dispositif de filtration et non pas de manière traversante (ne traverse pas le dispositif) c'est-à-dire non pas perpendiculairement au dispositif mais parallèlement ; l'air circule le long des nappes et/ou entre les nappes, dans une direction parallèle aux nappes textiles, cela permet de maximiser le contact de l'air à filtrer avec la surface active dépolluante ; si les nappes sont trop éloignées, l'air ne fait que circuler de manière laminaire et le temps de contact avec le dispositif de filtration est réduit, diminuant l'efficacité de dépollution.

Avantageusement, les nappes textiles sont suffisamment rapprochées pour maximiser le contact de l'air avec la surface photocatalytique, et provoquer des tourbillon dans le flux d'air. Avantageusement, il peut être envisagé d'ajouter en outre un ou plusieurs ventilateurs (en sus du groupe moto ventilateur principal de l'appareil), agitateurs ou turbulateurs, comme par exemple une hélice fixe, à l'entrée ou sous le dispositif de filtration, comme les nappes textiles, de manière à générer des tourbillons entre les nappes textiles.

Il peut être envisagé d'autres dispositions de la ou des nappes textiles, par exemple sous forme de rouleau où une nappe est roulée sur elle-même à la manière d'un rouleau de moquette.

Les fibres optiques présentent en surface des altérations, les extrémités libres des fibres optiques étant aptes à être agencées en regard d'une source lumineuse pour transmettre la lumière et émettre latéralement la lumière au niveau des altérations pour activer les particules photo-catalytiques.

Autrement dit, les particules photo-catalytiques sont activées par un rayonnement qui peut être du type ultraviolet, par l'intermédiaire des fibres optiques aptes à guider de façon homogène la lumière à l'intérieur de la nappe textile. Grâce au tissage des fibres optiques avec des fils de liage, la nappe textile ainsi formée présente une homogénéité et est facilement manipulable pour être solidarisée dans un appareil ou avec un châssis. Une simple découpe de la nappe textile aux dimensions de l'appareil ou du châssis permet de réaliser des dispositifs de dépollution de toutes dimensions.

De plus, la présence des fils de liage permet de former un dispositif de filtration dont la précision de filtration est fonction directement du mode de tissage de la nappe textile comprenant les fils de liage et non pas seulement du nombre de fibres optiques utilisées. En effet, l'air à filtrer peut circuler dans cette nappe en empêchant, par exemple, le passage de macro-particules.

Par ailleurs, les altérations réalisées en surface des fibres optiques pour émettre la lumière latéralement peuvent être réalisées de diverses manières, et notamment par des procédés de sablage, d'attaque chimique ou de fusion au moyen d'un rayonnement lumineux de forte intensité tel qu'un laser. Bien évidemment, de telles altérations peuvent également être réalisées par de nombreux autres procédés mécaniques ou chimiques.

Avantageusement, les altérations des fibres optiques peuvent être réparties de façon symétrique ou dissymétrique (progressive) sur la surface de la nappe textile. En effet, de manière à réaliser un éclairage homogène de la nappe textile, et donc une activation homogène des particules photo-catalytiques sur toute la superficie du textile, la densité surfacique ou la dimension des altérations peuvent varier d'une zone à l'autre de la nappe. De manière générale, à proximité de la source lumineuse, la densité surfacique des altérations est faible, tandis qu'elle augmente plus on s'éloigne de la source.

Le catalyseur à action photo-catalytique du dispositif de filtration de l'air de l'appareil selon l'invention est de préférence un matériau semi-conducteur.

De préférence, le catalyseur à action photo-catalytique comprend au moins un oxyde du groupe des oxydes TiO₂, ZnO, CeO₂.

De préférence, le catalyseur à action photo-catalytique comprend de l'oxyde de titane au moins partiellement cristallin.

L'appareil selon l'invention comprend une source de photons. Il est à noter que la source de photons peut être composée de plusieurs sources de photons identiques ou différentes.

Cette source de photons est de préférence une ou des sources lumineuses, identiques ou différentes. Les sources lumineuses destinées à éclairer les extrémités libres des fibres optiques peuvent être de différentes natures, et notamment se présenter sous la forme de diodes électroluminescentes ou de sources étendues tel que des lampes à incandescence, de tubes fluorescents ou de tubes à décharge incorporant un gaz tel que du néon.

L'appareil selon l'invention comprend de préférence une source lumineuse qui est un système d'illumination comprenant une LED, de préférence UV.

La source lumineuse peut être réalisée avec une LED UVA, UVB ou UVC. Un tel système permet de conjuguer une consommation énergétique minimale avec une efficacité notable. De plus ce type de système d'éclairement autorise des designs très particuliers avec optimisation de l'éclairement du catalyseur.

Ainsi, l'invention concerne également un appareil de filtration de l'air comprenant un dispositif de filtration de l'air intégrant au moins un catalyseur à action photo-catalytique et un système d'illumination par UV dudit catalyseur, ledit système d'illumination comprenant une LED, de préférence UV.

Par ailleurs, selon un mode de réalisation particulier, la source lumineuse peut comporter un collecteur apte à focaliser de manière ponctuelle ou linéique la lumière naturelle solaire en direction d'au moins une extrémité libre de fibre optique.

Par ailleurs, les particules photo-catalytiques peuvent être rapportées de différentes manières sur les différents composants de la nappe textile.

Selon une première variante, une couche d'enduction intégrant des particules photo- catalytiques peut être déposée sur les fils de liage avant que ces fils ne soient tissés avec les fibres optiques. Dans ce cas, les fibres optiques sont dépourvues de particules photo-catalytiques et permettent uniquement de véhiculer de la lumière au niveau des fils de liage sur lesquels sont rapportées les particules photo-catalytiques.

Selon une seconde variante, une couche d'enduction intégrant des particules photo- catalytiques peut être déposée sur le tissu formé par les fibres optiques associées avec les fils de liage. Dans ce cas, les particules photo-catalytiques sont noyées dans la couche d'enduction de la nappe textile enduite, présentant une perméabilité aux gaz ou aux liquides à dépolluer. Cette couche d'enduction peut être déposée de différentes manières, et notamment par bain, foulardage, émulsion, pulvérisation, impression, encapsulation, électrodéposition.

Dans ce cas, les fibres optiques peuvent être ponctuellement tissées avec les fils de liage, les fibres optiques étant sensiblement positionnées dans un plan parallèle au plan défini par les fils de liage sur lesquels la couche d'enduction est déposée. Ainsi, la couche d'enduction n'est pas déposée sur les fibres optiques, mais uniquement sur l'une des faces de la nappe formée par les fils de liage. De cette manière, les fils de liage recouvrent la couche d'enduction permettent de réaliser un écran protecteur pour les fibres optiques situées dans un plan parallèle décalé. En pratique, les fils de liage peuvent être tissés selon une armure de type toile. En effet, ce type d'armure procure à la nappe textile une tenue mécanique et une uniformité de surface optimales.

Généralement, les fibres optiques présentent une âme ou coeur, entouré d'une gaine et recouvert d'une enveloppe extérieure protectrice. Les altérations mentionnées plus haut peuvent selon les cas, peuvent endommager les différentes couches jusqu'à atteindre l'âme ou le coeur. Il est à noter que dans certain cas, selon les matériaux, il suffit d'altérer la couche protectrice pour obtenir une altération permettant de diffuser la lumière latéralement, dans d'autres cas, il faut altérer la couche protectrice et la gaine.

Selon un premier mode de réalisation, les fibres optiques peuvent comprendre une âme formée dans un matériau choisi parmi le groupe comprenant le polyméthacrylate de méthyle (PMMA), le polycarbonate (PC) et les cyclo-oléfines (COP).

Dans ce cas, les fibres optiques sont réalisées en deux matériaux et présentent une âme recouverte d'une gaine qui peut être de différente nature.

Selon un second mode de réalisation, les fibres optiques peuvent être formées dans un matériau choisi parmi le groupe comprenant le verre, le quartz et la silice. Dans ce cas, une gaine peut venir recouvrir les fibres optiques pour les protéger ou pour rapporter les particules photo-catalytiques sur la nappe textile.

Avantageusement, les fils de liage peuvent être formés dans un matériau choisi parmi le groupe comprenant le polyamide, le polyester, le polyéthylène et le polypropylène.

L'appareil selon l'invention peut comprendre en outre un moyen de temporisation et/ou un analyseur de composés organo-volatils et/ou un moyen de réglage automatique de la vitesse du gaz le traversant et/ou un moyen de réglage de l'intensité de l'illumination UV, ledit réglage étant réalisé en fonction du temps déterminé par le moyen de temporisation ou en fonction de la teneur en composés organiques volatils analysée par l'analyseur.

L'appareil selon l'invention peut comprendre en outre un analyseur de composés organiques volatils et un moyen de réglage automatique de la vitesse de l'air entrant et/ou de réglage de l'intensité de la source de photons en fonction de la teneur en composés organiques volatils analysée par l'analyseur.

Un appareil de purification de l'air selon l'invention peut comprendre en outre un ou des pré filtres, identiques ou différents, en amont du flux, pour piéger les poussières et particules. L'air à purifier est généralement pulsé ou aspiré dans le dispositif de filtration à l'aide d'une turbine à flux radial ou à flux mixte, ou d'un ventilateur, agencé en aval du dispositif de filtration. Dans ce cas, un groupe moto ventilateur peut être disposé du côté de la sortie d'air, au-dessus du dispositif de filtration.

Le préfiltre peut être un filtre à particules qui sépare par action mécanique en retenant en surface les particules dont le diamètre est supérieur au diamètre des pores du filtre et possiblement retenir les particules dont le diamètre est inférieur à celui des pores du filtre par l'action des forces électrostatiques. Dans ce cas, l'appareil selon l'invention comprend en outre un filtre à particules.

Le préfiltre peut être un déshumidificateur pour réduire la teneur en humidité pour être efficace.

Le préfiltre peut être un filtre à charbon actif. Ces filtres ont été élaborés en réponse aux émissions industrielles de composés organiques volatils (COV). Dans un système d'adsorption à charbon actif, l'air contaminé est dirigé sur un lit de carbone. Le carbone extrait les COV de l'air et les adsorbe en les maintenant à la surface. Dans ce cas, l'appareil selon l'invention comprend en outre un filtre à charbon actif.

Le préfiltre peut être un filtre à air, du type des filtres HEPA (acronyme de l'anglais High Efficiency Particulate Air) signifiant filtre à particules aériennes à haute efficacité. Le filtre à air est de préférence un dispositif capable de filtrer, en un passage, au moins 99,97 % des particules de diamètre supérieur ou égal à 0,3 µm.

Un appareil de purification de l'air selon l'invention peut comprendre en outre un ou des autres filtres, identiques ou différents, pour le cas où des contraintes géométriques imposent que des COV ressortent malgré tout en aval du catalyseur photo-catalytique.

Dans ces variantes, il est possible de disposer sur le chemin du flux d'air, en aval du flux, un autre média, dit média piégeur (« scavenger » en anglais) dont le rôle est de retenir au moins partiellement les COV, le cas échéant après réaction chimique. On distingue ainsi les différentes catégories de média piégeurs :
- ceux qui retiennent les COV comme le formaldéhyde ou l'acétaldéhyde par simple interaction physique, comme c'est le cas du charbon actif ou de certaines zéolithes ;
- ceux qui interagissent chimiquement avec les COV comme le formaldéhyde ou l'acétaldéhyde et laissent échapper des molécules carbonées issues de la réaction du COV comme le formaldéhyde ou de l'acétaldéhyde avec le média piégeur : c'est le cas des filtres chimiques contenant un permanganate comme le permanganate de potassium ;
- ceux qui interagissent chimiquement avec les COV comme le formaldéhyde ou l'acétaldéhyde sans laisser échapper de molécule carbonée provenant de la réaction dudit COV comme le formaldéhyde ou de l'acétaldéhyde avec le média piégeur : c'est le cas de médias piégeurs contenant un composé comprenant un groupement NH ; la réaction chimique est ici plutôt du type greffage puisque la réaction entre le groupement N-H (substance sur le média scavenger) et le groupement C=0 du formaldéhyde ou de l'acétaldéhyde, conduit à un enchaînement du type N-C-OH sans formation de molécule carbonée volatile.

Dans ce cas, l'appareil selon l'invention comprend en outre un filtre à formaldéhyde.

Par le terme « piégeur », on entend donc que le média piégeur retient au moins partiellement le formaldéhyde ou l'acétaldéhyde, soit par une réaction chimique (de greffage par exemple), soit par une interaction physique du type adsorption ou absorption.

On peut aussi, afin d'améliorer l'efficacité de l'appareil selon l'invention, placer un média piégeur en amont ou en parallèle du catalyseur à action photo-catalytique dans le cas d'un appareil fonctionnant en recirculation du flux d'air, c'est-à-dire faisant tourner en boucle (boucle ouverte ou semi-ouverte) l'air de la pièce à purifier.

Dans ce mode de fonctionnement, on peut utiliser ce média piégeur de COV également en tant que filtre à poussières.

Avantageusement, l'appareil selon l'invention est de petite taille, et présente un volume inférieur à 1 m³, de préférence inférieur à 0,8 m³, plus préférentiellement inférieur à 0,6 m³.

Avantageusement, l'appareil selon l'invention est léger, sa masse ne dépassant pas 30 kg, de préférence sa masse est inférieure à 20 kg, plus préférentiellement inférieure à 12kg.

Avantageusement, l'appareil selon l'invention présente une surface apparente de nappe textile d'au moins 4000 cm², de préférence d'au moins 6000 cm², plus préférentiellement d'au moins 8000 cm². Par surface apparente, on entend la surface de la nappe textile au contact du flux d'air.

Avantageusement, l'appareil selon l'invention présente une vitesse du flux d'air circulant dans la nappe textile inférieure à 1 m/s, de préférence inférieure à 0,5 m/s, plus préférentiellement inférieure à 0,2 m/s.

Avantageusement, l'appareil selon l'invention présente un temps de contact des polluants avec la nappe textile d'au moins 0,5 s et peut être aussi long que possible, ceci grâce à un écoulement tourbillonnant du flux d'air à traiter. Ainsi le flux d'air à traiter présente une vitesse rotationnelle en tout point. L'écoulement tourbillonnant permet d'augmenter le temps de contact moyen entre l'air à filtrer et le dispositif de filtration, comme les nappes textiles. Plus le temps de contact est long, moins il y a de risque de produire de sous-produit polluant.

### Brève description des dessins

On comprendra mieux les buts, aspects et avantages de la présente invention, d'après la description donnée ci-après de modes particuliers de réalisation de l'invention présentés à titre d'exemples non limitatifs, en se référant aux dessins annexés dans lesquels :

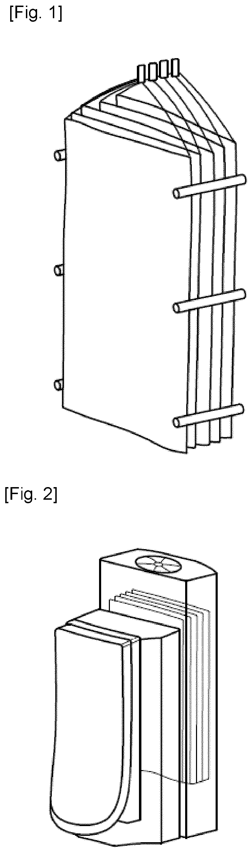

[Fig. 1] La figure 1 est une vue en perspective d'un exemple de réalisation d'un dispositif de filtration de l'air intégrant au moins une fibre optique et un catalyseur à action photo-catalytique, le dispositif étant plusieurs nappes textiles superposées en feuillet.
[Fig. 2] La figure 2 est une vue en perspective d'un premier exemple de réalisation d'un appareil selon l'invention.

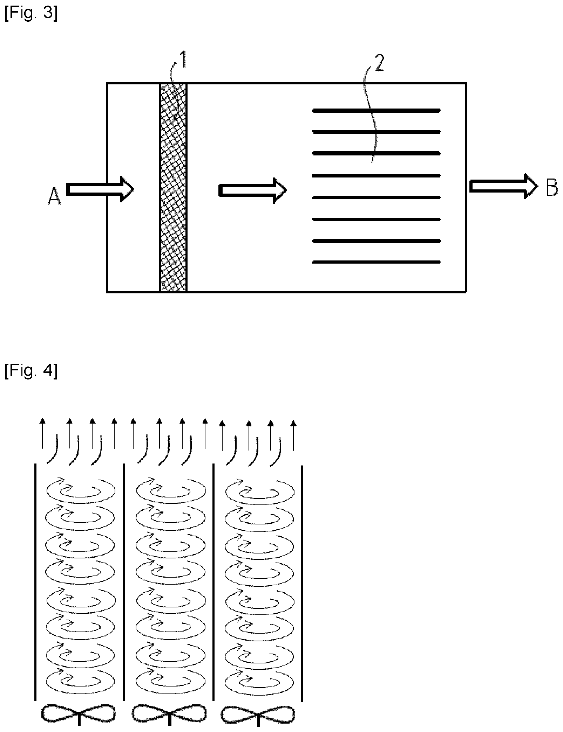

[Fig. 3] La figure 3 est un schéma de principe de la circulation de l'air dans le purificateur. L'air entrant par l'entrée A et sortant par la sortie B. En 1 se trouve un filtre à particule et en 2 se trouve un dispositif de filtration de l'air intégrant au moins une fibre optique et un catalyseur à action photo-catalytique selon l'invention.
[Fig. 4] La figure 4 est un schéma de principe de la circulation de l'air dans le dispositif de filtration d'air du purificateur. L'air circule en moyenne tangentiellement dans le dispositif de filtration 2 mais avec une vitesse rotationnelle, par rapport à l'agencement de ce dispositif. La vitesse rotationnelle peut être créé par un ventilateur, agitateur ou turbulateur disposé en dessous du dispositif de filtration,

## Revendications

1. Appareil de purification de l'air comprenant au moins
- une entrée d'air ;
- une sortie d'air ;
- un dispositif de filtration de l'air présentant plusieurs nappes textiles superposées en feuillet, l'air circulant entre les feuillets, et comprenant au moins une fibre optique et un catalyseur à action photo-catalytique, la fibre optique présentant des altérations en surface afin de diffuser la lumière latéralement par rapport au sens de déplacement de la lumière dans la fibre ;
- une source de photons.

2. Appareil selon la revendication 1 **caractérisé en ce qu'**il s'agit d'un appareil domestique comprenant un carter formant l'enveloppe extérieure de l'appareil.

3. Appareil selon l'une quelconque des revendications précédentes **caractérisé en ce qu'**il s'agit d'un appareil mobile pendant son utilisation.

4. Appareil selon l'une quelconque des revendications précédentes **caractérisé en ce que** les fibres optiques du dispositif de filtration sont tissées avec des fils de liage enduits du catalyseur à action photo-catalytique.

5. Appareil selon l'une quelconque des revendications précédentes **caractérisé en ce que** le catalyseur à action photo-catalytique est un matériau semi-conducteur.

6. Appareil selon l'une quelconque des revendications précédentes **caractérisé en ce que** le catalyseur à action photo-catalytique comprend au moins un oxyde du groupe des oxydes TiO₂, ZnO, CeO_{2.}

7. Appareil selon l'une quelconque des revendications précédentes **caractérisé en ce que** le catalyseur à action photo-catalytique comprend de l'oxyde de titane au moins partiellement cristallin.

8. Appareil selon l'une quelconque des revendications précédentes **caractérisé en ce que** la source de photons est une ou des sources lumineuses.

9. Appareil selon l'une quelconque des revendications précédentes **caractérisé en ce que** la source lumineuse est un système d'illumination comprenant une LED, de préférence UV.

10. Appareil selon l'une quelconque des revendications précédentes **caractérisé en ce qu'**il comprend un analyseur de composés organiques volatils et un moyen de réglage automatique de la vitesse de l'air entrant et/ou de réglage de l'intensité de la source de photons en fonction de la teneur en composés organiques volatils analysée par l'analyseur.

11. Appareil selon l'une quelconque des revendications précédentes **caractérisé en ce qu'**il comprend en outre un filtre à particules.

12. Appareil selon l'une quelconque des revendications précédentes **caractérisé en ce qu'**il comprend en outre un filtre à charbon actif.

13. Appareil selon l'une quelconque des revendications précédentes **caractérisé en ce qu'**il comprend en outre un filtre à formaldéhyde.

14. Appareil selon l'une quelconque des revendications précédentes **caractérisé en ce qu'**il comprend en outre un ou plusieurs ventilateurs, agitateurs ou turbulateurs.

## Patentansprüche

1. Luftreinigungseinrichtung, umfassend mindestens
- einen Lufteingang;
- einen Luftausgang;
- eine Luftfilterungvorrichtung, die mehrere folienartig überlagerte Textillagen aufweist, wobei die Luft zwischen den Folien zirkuliert, und mindestens eine optische Faser und einen Katalysator mit fotokatalytischer Wirkung umfasst, wobei die optische Faser Oberflächenveränderungen aufweist, um das Licht in Bezug auf die Bewegungsrichtung des Lichts in der Faser seitlich zu zerstreuen;
- eine Fotonenquelle.

2. Einrichtung nach Anspruch 1, **dadurch gekennzeichnet, dass** es sich um eine Haushaltseinrichtung handelt, die ein Gehäuse umfasst, das die Außenhülle der Einrichtung bildet.

3. Einrichtung nach einem der vorstehenden Ansprüche, **dadurch gekennzeichnet, dass** es sich um eine Einrichtung handelt, die während ihres Gebrauchs beweglich ist.

4. Einrichtung nach einem der vorstehenden Ansprüche, **dadurch gekennzeichnet, dass** die optischen Fasern der Filterungsvorrichtung mit Bindedrähten verwoben sind, die mit dem Katalysator mit fotokatalytischer Wirkung überzogen sind.

5. Einrichtung nach einem der vorstehenden Ansprüche, **dadurch gekennzeichnet, dass** der Katalysator mit fotokatalytischer Wirkung ein halbleitendes Material ist.

6. Einrichtung nach einem der vorstehenden Ansprüche, **dadurch gekennzeichnet, dass** der Katalysator mit fotokatalytischer Wirkung mindestens ein Oxid der Gruppe der Oxide TiO₂, ZnO, CeO₂ umfasst.

7. Einrichtung nach einem der vorstehenden Ansprüche, **dadurch gekennzeichnet, dass** der Katalysator mit fotokatalytischer Wirkung mindestens teilweise kristallines Titanoxid umfasst.

8. Einrichtung nach einem der vorstehenden Ansprüche, **dadurch gekennzeichnet, dass** die Fotonenquelle eine Lichtquelle oder Lichtquellen ist.

9. Einrichtung nach einem der vorstehenden Ansprüche, **dadurch gekennzeichnet, dass** die Lichtquelle ein Beleuchtungssystem ist, das eine LED, vorzugsweise UV, umfasst.

10. Einrichtung nach einem der vorstehenden Ansprüche, **dadurch gekennzeichnet, dass** sie einen Analysator flüchtiger organischer Verbindungen und ein Mittel zur automatischen Regelung der Geschwindigkeit der eintretenden Luft und/oder zur Regelung der Intensität der Fotonenquelle in Abhängigkeit von dem Gehalt an flüchtigen organischen Verbindungen, der von dem Analysator analysiert wird, umfasst.

11. Einrichtung nach einem der vorstehenden Ansprüche, **dadurch gekennzeichnet, dass** sie weiter einen Partikelfilter umfasst.

12. Einrichtung nach einem der vorstehenden Ansprüche, **dadurch gekennzeichnet, dass** sie weiter einen Aktivkohlefilter umfasst.

13. Einrichtung nach einem der vorstehenden Ansprüche, **dadurch gekennzeichnet, dass** sie weiter einen Formaldehydfilter umfasst.

14. Einrichtung nach einem der vorstehenden Ansprüche, **dadurch gekennzeichnet, dass** sie weiter einen oder mehrere Gebläse, Rührstäbe oder Turbulatoren umfasst.

## Claims

1. Device for purifying air comprising at least
- an air inlet;
- an air outlet;
- an air filtration device having several textile layers superposed in sheets, the air circulating between the sheets, and comprising at least one optical fibre and a photocatalytic action catalyst, the optical fibre having surface alterations in order to diffuse light laterally with respect to the movement direction of light in the fibre;
- a photon source.

2. Device according to claim 1, **characterised in that** it relates to a domestic device comprising a casing forming an outer envelope of the device.

3. Device according to any one of the preceding claims, **characterised in that** it relates to a device that moves when it is used.

4. Device according to any one of the preceding claims, **characterised in that** the optical fibres of the air filtration device are woven with binder filaments coated with photocatalytic action catalyst.

5. Device according to any one of the preceding claims, **characterised in that** the photocatalytic action catalyst is a semiconductor material.

6. Device according to any one of the preceding claims, **characterised in that** the photocatalytic action catalyst comprises at least one oxide of the oxide group, TiO₂, ZnO, CeO₂.

7. Device according to any one of the preceding claims, **characterised in that** the photocatalytic action catalyst comprises at least partially crystalline titanium oxide.

8. Device according to any one of the preceding claims, **characterised in that** the photon source is one or more light sources.

9. Device according to any one of the preceding claims, **characterised in that** the light source is an illumination system comprising a preferably UV LED.

10. Device according to any one of the preceding claims, **characterised in that** it comprises a volatile organic compound analyser and a means for automatically adjusting incoming air speed and/or adjusting the intensity of the photon source according to the volatile organic compound content analysed by the analyser.

11. Device according to any one of the preceding claims, **characterised in that** it further comprises a particle filter.

12. Device according to any one of the preceding claims, **characterised in that** it further comprises a charcoal filter.

13. Device according to any one of the preceding claims, **characterised in that** it further comprises a formaldehyde filter.

14. Device according to any one of the preceding claims, **characterised in that** it further comprises one or more fans, stirrers or turbulators.
